# FASCICULE DE BREVET EUROPEEN

(11) **EP 3 394 399 B1**
(45) Date de publication et mention de la délivrance du brevet: **07.07.2021**
(21) Numéro de dépôt: 16831500.0
(22) Date de dépôt: 21.12.2016
(51) Int. Cl.: F01D 5/14, F01D 5/28

(54) **AUBE, SOUFFLANTE ET TURBORÉACTEUR ASSOCIÉS**
SCHAUFEL, ZUGEHÖRIGES GEBLÄSE UND MANTELSTROM-TRIEBWERK
BLADE, ASSOCIATED FAN AND TURBOJET ENGINE

(30) Priorité: 21.12.2015 FR 1563009
(43) Date de publication de la demande: 31.10.2018
(73) Titulaire: Safran Aircraft Engines, 75015 Paris (FR)
(72) Inventeur: POUZADOUX, Frédéric, Jean-Bernard, 77550 Moissy-Cramayel Cedex (FR); BASSOT, Alain, Jacques, Michel, 77550 Moissy-Cramayel Cedex (FR); GUIVARC'H, Jérémy, 77550 Moissy-Cramayel Cedex (FR); ROMERO, Jean-Louis, 77550 Moissy-Cramayel Cedex (FR); RUF, Thibault, 77550 Moissy-Cramayel Cedex (FR)
(74) Mandataire: Cabinet Beau de Loménie
(86) Numéro de dépôt international: PCT/FR2016/053608
(87) Numéro de publication internationale: WO 2017/109408

(56) Documents cités:
- EP-A1- 1 032 749
- EP-A1- 1 032 749
- EP-A1- 2 594 805
- EP-A1- 2 594 805
- EP-A2- 2 256 296
- EP-A2- 2 256 296
- EP-A2- 2 299 123
- EP-A2- 2 299 123
- EP-A2- 2 458 153
- EP-A2- 2 458 153
- WO-A1-2016/174412
- GB-A- 2 298 653
- GB-A- 2 298 653
- US-A- 3 892 612
- US-A- 3 892 612

## Description

### Arrière-plan de l'invention

La présente invention concerne un bouclier de bord d'attaque pour aube de turbomachine. On entend par « turbomachine », dans ce contexte, toute machine dans laquelle peut s'opérer un transfert d'énergie entre un écoulement de fluide et au moins un aubage, comme, par exemple, un compresseur, une pompe, une turbine, une hélice, ou bien une combinaison d'au moins deux de ceux-ci. Plus précisément, l'invention concerne une aube, une soufflante et un turboréacteur à double flux.

De tels boucliers de bord d'attaque sont typiquement destinés à protéger les bords d'attaque d'aubes tournantes ou d'aubes directrices contre les impacts. On entend par « aubes », dans ce contexte, tant les aubes de soufflante que les pales d'hélice aérienne. Afin de limiter leur poids, ces aubes sont typiquement principalement formées d'un corps d'aube en composite à matrice organique, par exemple en polymère, renforcée par des fibres. Bien que ces matériaux présentent des qualités mécaniques généralement très favorables, en particulier par rapport à leur masse, ils présentent une certaine sensibilité aux impacts ponctuels. Des boucliers, typiquement en matériau métallique hautement résistant, comme les alliages de titane, sont donc normalement installés sur les bords d'attaque de telles aubes, afin de les protéger contre ces impacts. Ces boucliers prennent normalement la forme d'une fine ailette intrados et une fine ailette extrados jointes par une section plus épaisse chevauchant le bord d'attaque, l'ensemble épousant la forme de l'aube sur le bord d'attaque et des sections adjacentes de l'intrados et de l'extrados. Les ailettes intrados et extrados s'étendent en hauteur et en longueur sur ces sections de, respectivement, l'intrados et l'extrados de l'aube, et servent principalement à assurer le positionnement et la fixation du bouclier sur le bord d'attaque, mais aussi à distribuer la force d'un impact et dissiper son énergie sur une plus grande surface du corps d'aube. Ainsi, en cas d'impact sur le bouclier de bord d'attaque, des ondes de déformation vont se propager à travers ce bouclier, y compris les ailettes, jusqu'à y être entièrement dissipées. Toutefois, dans certains cas, cette propagation peut créer des pics de déformation pouvant aller jusqu'à provoquer un décollement partiel d'une ailette. GB 2 298 653 A divulgue l'art antérieur selon le préambule de la revendication 1.

### Objet et résumé de l'invention

La présente invention vise à remédier à ces inconvénients, en proposant un bouclier de bord d'attaque pour aube de turbomachine qui résiste mieux au décollement en cas d'impact.

Selon l'invention, ce but est atteint grâce à une aube définie dans la revendication 1.

L'angle d'intersection peut même être inférieur à 60°.

Un tel angle aigu présente l'avantage, par rapport à un angle plus ouvert, voire droit, de rendre plus difficile le décollement de l'ailette à partir de la jonction entre le bord arrière et le bord supérieur en cas d'impact.

Le bouclier de bord d'attaque peut être en matériau métallique.

Le matériau anisotrope peut ainsi résister aux efforts en flexion de cette aube. Ce matériau anisotrope peut notamment être un matériau composite renforcé avec des fibres orientées suivant au moins ladite direction principale de résistance mécanique.

Comme on évite que le bord arrière de l'ailette soit aligné avec cette direction principale de résistance mécanique à proximité de la tête d'aube, on rend plus difficile l'arrachement de l'ailette à partir du bord arrière qui pourrait sinon être facilité par la moindre résistance mécanique du matériau anisotrope du corps d'aube perpendiculairement à sa direction principale de résistance mécanique.

La présente invention concerne aussi une soufflante comprenant une pluralité de telles aubes et un turboréacteur à double flux comprenant une telle soufflante.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue schématique en perspective d'un turboréacteur à double flux ;
- la figure 2 est une vue schématique en perspective du côté extrados d'une aube tournante de la soufflante du turboréacteur de la figure 1 selon un premier mode de réalisation de l'aube ;
- la figure 3 est une vue partielle en coupe de l'aube de la figure 2 selon le plan III-III.

### Description détaillée de l'invention

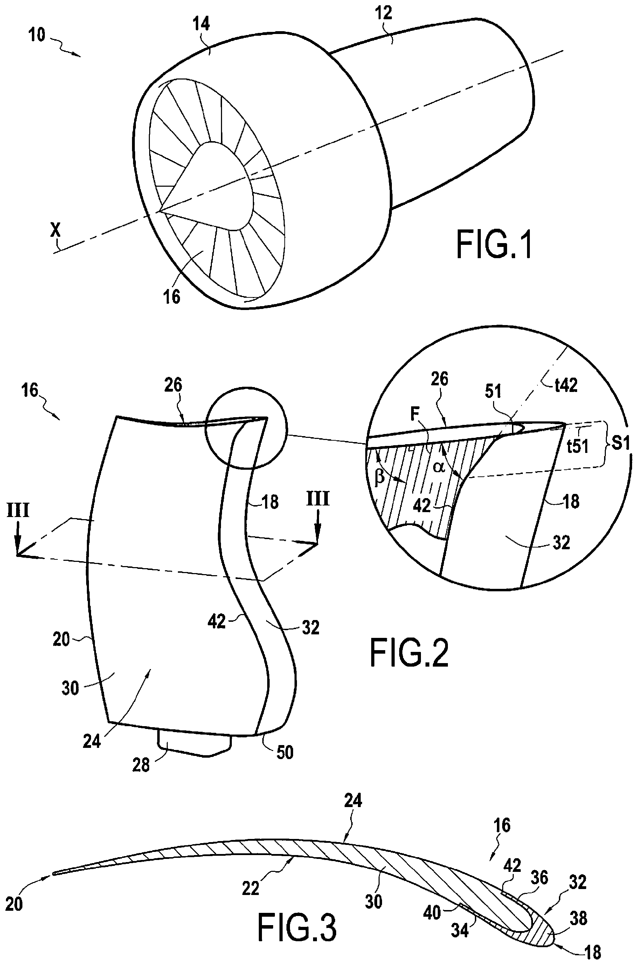

La figure 1 illustre un turboréacteur à double flux 10 comprenant un groupe générateur de gaz 12 et une soufflante 14. Cette soufflante 14 comprend une pluralité d'aubes tournantes 16, arrangées radialement autour d'un axe central X, profilées aérodynamiquement de manière à impulser l'air par leur rotation et entourées par un carter de soufflante. Ainsi, comme illustré sur les figures 2 et 3, chaque aube 16 présente un bord d'attaque 18, un bord de fuite 20, un intrados 22, un extrados 24, une tête d'aube 26 et un pied d'aube 28. En outre, l'aube 16 comprend un corps d'aube 30 en matériau composite, notamment à matrice polymère renforcée par des fibres. Ces fibres présentent au moins une orientation particulière, résultant ainsi en au moins une direction principale de résistance mécanique, et donc un caractère anisotrope du matériau. Plus spécifiquement, afin de mieux résister aux efforts centrifuges, ainsi qu'aux efforts en flexion sur l'aube, cette direction principale peut être celle de la hauteur de la pale 16, du pied d'aube 28 à la tête d'aube 26.

En fonctionnement normal, le vent relatif est sensiblement orienté vers le bord d'attaque 18 de chaque aube 16. Ainsi, ce bord d'attaque 18 est particulièrement exposé aux impacts. Il convient donc de protéger le bord d'attaque 18 avec un bouclier de bord d'attaque 32 intégré à chaque aube 16. En d'autres termes, le bouclier de bord d'attaque 32 est assemblé sur le corps d'aube 30.

Le bouclier de bord d'attaque 32 est fabriqué en un matériau ayant une meilleure résistante aux impacts ponctuels que le matériau composite du corps d'aube 30. Le bouclier de bord d'attaque 32 est préférablement métallique, et plus spécifiquement en alliage à base de titane, comme par exemple le TA6V (Ti-6Al-4V). Le bouclier de bord d'attaque 32 pourrait également être en acier ou en alliage métallique communément désigné par la marque déposée Inconel™. On parle par la suite d'Inconel pour désigner un alliage à base de fer allié avec du nickel et du chrome.

Comme illustré notamment sur la figure 3, le bouclier de bord d'attaque 32 comporte une ailette intrados 34, une ailette extrados 36, et une section centrale 38 plus épaisse, destinée à chevaucher un bord du corps d'aube 30 et reliant l'ailette intrados 34 et l'ailette extrados 36 au bord d'attaque 18. Les ailettes intrados et extrados 34, 36 assurent le positionnement du bouclier 32 sur le corps d'aube 30, mais aussi la dissipation de l'énergie d'impact. Les ailettes intrados et extrados 34, 36 et s'étendent chacune en hauteur sur une hauteur H d'un bord inférieur 50 à un bord supérieur 51 et en longueur du bord d'attaque 18 au bord arrière 40, 42 correspondant.

Afin de mieux dissiper l'énergie des ondes de déformation se propageant à travers le bouclier 32 suite à un impact, le bord arrière 42 de l'ailette extrados 36 n'est pas parallèle au bord d'attaque 18 sur toute sa longueur, mais est incliné à proximité du bord supérieur 51 de manière à ce que, sur tout un segment S1 adjacent au bord supérieur 51, l'angle intersection α entre une tangente t51 dans le sens du bord d'attaque 18 au bord supérieur 51 et une tangente t42 dans le sens du bord supérieur 51 à un point quelconque du bord arrière 42 soit inférieur à 75°, voire inférieur à 60°. Le segment S1 s'étend sur au moins 6%, et peut par exemple s'étendre sur 10%, voire 15% de la hauteur H du bouclier 30 à partir du bord supérieur 51. L'inclinaison du bord arrière 42 vers le bord d'attaque 18 en approchant le bord supérieur 51 réduit localement la longueur de l'ailette extrados 36, ce qui contribue à empêcher la propagation d'un décollement local du bouclier 32 le long du bord arrière 42.

Puisqu'au moins une partie des fibres F du matériau composite du corps d'aube 30 sont orientées suivant la hauteur de la pale 16, cette direction principale du matériau composite du corps d'aube 30 présente un angle β sensiblement droit par rapport au bord supérieur 51 du bouclier 32 dans un plan sensiblement parallèle à une surface interne de l'ailette extrados 36. Plus spécifiquement, cet angle β peut être entre 60° et 120°, voire entre 75° et 105°. Plus particulièrement, comme illustré sur la figure 3, des fibres F suivant cette orientation peuvent être intégrées dans une couche, par exemple de fibres unidirectionnelles ou tissées en au moins deux directions, proche ou même adjacente à l'extrados 24, même si le matériau composite du corps d'aube 30 peut être recouvert d'une couche de vernis ou de peinture sur cette surface.

Grâce à l'inclinaison du bord arrière 42 de l'ailette extrados 36 à proximité du bord supérieur 51, on peut notamment assurer que l'angle d'intersection α entre la tangente t42 à un point quelconque du bord arrière 42 dans le segment 51 soit sensiblement inférieur, par exemple inférieur d'au moins 5°, voire 10°, voire 15° ou 25°, à l'angle β, de manière à éviter un alignement de ce bord arrière 42 avec ces fibres F, alignement qui faciliterait un arrachement de ce bord arrière 42 avec un ou des fragments de ce matériau composite en cas d'impact.

Quoique la présente invention ait été décrite en se référant à un exemple de réalisation spécifique, il est évident que différentes modifications et changements peuvent être effectués sur cet exemple sans sortir de la portée générale de l'invention telle que définie par les revendications. En particulier, quoique dans le mode de réalisation décrit et illustré seule l'ailette extrados présente un bord arrière incliné à proximité du bord supérieur, l'invention est également applicable à l'ailette intrados, voire aux deux ailettes. Par conséquent, la description et les dessins doivent être considérés dans un sens illustratif plutôt que restrictif.

## Revendications

1. Aube (16) s'étendant en hauteur d'un pied d'aube (28) à une tête d'aube (26) et en longueur d'un bord d'attaque (18) à un bord de fuite (20), l'aube (16) comprenant un corps d'aube (30) et un bouclier de bord d'attaque (32) assemblé sur le corps d'aube (30), le corps d'aube (30) étant en matériau anisotrope, et le bouclier de bord d'attaque (32) étant en un matériau ayant une meilleure résistance aux impacts ponctuels que le matériau anisotrope du corps d'aube (30), ledit bouclier de bord d'attaque (32) comportant deux ailettes (34, 36) s'étendant chacune sur une hauteur (H) d'un bord inférieur (50) à un bord supérieur (51) et en longueur du bord d'attaque (18) à un bord arrière (40,42) respectif, et reliées l'une à l'autre à travers le bord d'attaque (18), et au moins une desdites ailettes (34,36) présentant un segment (S1), adjacent au bord supérieur (51) l'aube étant
**caractérisée en ce que** le segment (S1) s'étend à partir du bord supérieur (51) sur au moins 6% de la hauteur (H), le bord arrière (40,42) respectif dans le segment (S1) s'inclinant dans le sens du bord supérieur (51) vers le bord d'attaque (18) de telle manière qu'un angle d'intersection (α) entre une tangente (t51) dans le sens du bord d'attaque (18) au bord supérieur (51) et une tangente (t42) dans le sens du bord supérieur (51) à un point quelconque du bord arrière (40,42) dans ledit segment (S1) soit inférieur à 75°, le matériau anisotrope comprenant au moins une couche avec une direction principale de résistance mécanique sensiblement parallèle à une surface interne d'ailette adjacente audit segment (S1) et présentant un angle (β) entre ladite direction principale de résistance mécanique dans le sens de la tête d'aube (26) et une tangente dans le sens du bord d'attaque (18) audit bord supérieur (51) sensiblement supérieur à une valeur maximale dudit angle d'intersection (α) dans ledit segment (S1).

2. Aube (16) suivant la revendication 1, dans lequel ledit angle d'intersection (α) est inférieur à 60°.

3. Aube (16) suivant l'une quelconque des revendications précédentes, dans laquelle le bouclier de bord d'attaque (32) est en matériau métallique.

4. Aube (16) suivant l'une quelconque des revendications 1 à 3, dans laquelle ledit matériau anisotrope est un matériau composite renforcé avec des fibres (F) orientées suivant au moins ladite direction principale de résistance mécanique.

5. Soufflante (14) comprenant une pluralité d'aubes (16) selon l'une quelconque des revendications 1 à 4.

6. Turboréacteur à double flux (10) comprenant une soufflante (14) selon la revendication 5.

## Patentansprüche

1. Schaufel (16), die sich der Höhe nach von einem Schaufelfuß (28) zu einem Schaufelkopf (26) und der Länge nach von einer Vorderkante (18) zu einer Hinterkante (20) erstreckt, wobei die Schaufel (16) einen Schaufelkörper (30) und einen Vorderkantenschild (32) umfasst, der auf dem Schaufelkörper (30) zusammengebaut ist, wobei der Schaufelkörper (30) aus anisotropem Werkstoff ist, und der Vorderkantenschild (32) aus einem Werkstoff mit einer besseren Festigkeit gegenüber punktuellen Aufschlägen als der anisotrope Werkstoff des Schaufelkörpers (30) ist, wobei der Vorderkantenschild (32) zwei Flügel (34, 36) aufweist, die sich jeweils über eine Höhe (H) von einer unteren Kante (50) zu einer oberen Kante (51) und in der Länge von der Vorderkante (18) zu einer jeweiligen Hinterkante (40, 42) erstrecken und über die Vorderkante (18) miteinander verbunden sind, und wobei mindestens einer der Flügel (34, 36) ein Segment (S1) neben der oberen Kante (51) aufweist,
wobei die Schaufel **dadurch gekennzeichnet ist, dass** sich das Segment (S1) ab der oberen Kante (51) über mindestens 6% der Höhe (H) erstreckt, wobei sich die jeweilige Hinterkante (40, 42) in dem Segment (S1) in Richtung der oberen Kante (51) zur Vorderkante (18) derart neigt, dass ein Schnittkantenwinkel (α) zwischen einer Tangente (t51) zur oberen Kante (51) in Richtung der Vorderkante (18) und einer Tangente (t42) in Richtung der oberen Kante (51) zu einem beliebigen Punkt der Hinterkante (40, 42) in dem Segment (S1) kleiner als 75° ist, wobei der anisotrope Werkstoff mindestens eine Schicht mit einer mechanischen Hauptfestigkeitsrichtung umfasst, die etwa parallel zu einer inneren Flügeloberfläche neben dem Segment (S1) ist und einen Winkel (β) zwischen der mechanischen Hauptfestigkeitsrichtung in Richtung des Schaufelkopfs (26) und einer Tangente zur oberen Kante (51) in Richtung der Vorderkante (18) aufweist, der im Wesentlichen größer als ein maximaler Wert des Schnittkantenwinkels (α) in dem Segment (S1) ist.

2. Schaufel (16) nach Anspruch 1, wobei der Schnittpunktwinkel (α) kleiner als 60° ist.

3. Schaufel (16) nach einem der vorangehenden Ansprüche, wobei der Vorderkantenschild (32) aus metallischem Werkstoff ist.

4. Schaufel (16) nach einem der Ansprüche 1 bis 3, wobei der anisotrope Werkstoff ein mit Fasern (F) verstärkter Verbundwerkstoff ist, die gemäß mindestens der mechanischen Hauptfestigkeitsrichtung ausgerichtet sind.

5. Gebläse (14), umfassend eine Vielzahl von Schaufeln (16) nach einem der Ansprüche 1 bis 4.

6. Mantelstromtriebwerk (10), umfassend ein Gebläse (14) nach Anspruch 5.

## Claims

1. A blade (16) extending heightwise from a blade root (28) to a blade tip (26) and lengthwise from a leading edge (18) to a trailing edge (20), the blade (16) comprising a blade body (30) and a leading-edge shield (32) assembled on the blade body (30), the blade body (30) being made of anisotropic material, and the leading-edge shield (32) being made of a material with better point impact resistance than the anisotropic material of the blade body (30), said leading-edge shield (32) including two wings (34, 36), each extending along a height (H) from a bottom edge (50) to a top edge (51) and lengthwise from the leading edge (18) to a respective rear edge (40,42), the wings being connected together over the leading edge (18), and at least one of said wings (34, 36) presenting a segment (S1), adjacent to the top edge (51), the blade being **characterized in that** the segment (S1) extends from the top edge (51) over at least 6% of the height (H), the respective rear edge (40, 42) within the segment (S1) sloping in the direction of the top edge (51) towards the leading edge (18) in such a manner that an angle of intersection (α) between a tangent (t51) in the direction of the leading edge to the top edge (51) and a tangent (t42) in the direction of the top edge (51) to any point of the rear edge (40,42) in said segment (S1) is less than 75°, the anisotropic material comprising at least one layer with a main strength direction that is substantially parallel to an inside surface of a wing adjacent to said segment (S1) and presenting an angle (β) between said main strength direction in the direction of the blade tip (26) and a tangent in the direction of the leading edge to said top edge (51) that is substantially greater than a maximum value for said angle of intersection (α) in said segment (S1) .

2. A blade (16) according to claim 1, wherein said angle of intersection (α) is less than 60°.

3. A blade (32) according to either preceding claim, wherein the leading edge shield (32) is made of metal material.

4. A blade (16) according to any one of claims 1 to 3, wherein said anisotropic material is a composite material reinforced with fibers (F) oriented along at least said main strength direction.

5. A fan (14) including a plurality of blades (16) according to any one of claims 1 to 4.

6. A turbofan (10) including a fan (14) according to claim 5.
